# DEMANDE DE BREVET EUROPEEN

(11) **EP 1 918 181 A1**
(43) Date de publication de la demande: **07.05.2008**
(21) Numéro de dépôt: 07021176.8
(22) Date de dépôt: 30.10.2007
(51) Int. Cl.: B62D 63/06, B60P 3/12

(54) **Remorque de type basculante pourvue d'un dispositif de chargement et de déchargement d'une charge**

(30) Priorité: 02.11.2006 FR 0609654
(71) Demandeur: Ansideï, Ignace, 49380 Faye D'Anjou (FR)
(72) Inventeur: Ansideï, Ignace, 49380 Faye D'Anjou (FR)
(74) Mandataire: Maillet, Alain

(57) **Abrégé**

La présente invention se rapporte à une remorque (100) de type basculante comprenant un châssis (200) sur lequel est monté un timon articulé (210), un chariot (330) monté à coulissement sur le châssis (200) pour entraîner un moyen de chargement (350, 350') d'une charge entre une position de chargement/déchargement de la charge où le moyen de chargement (350, 350') repose par une extrémité sur le sol en étant tenu par son autre extrémité par le chariot (330) lorsque la remorque (100) est basculée et une position de transport de la charge où le moyen de chargement (350, 350') repose sur le châssis (200) de la remorque (100) lorsqu'elle est configurée dans sa position de transport.

Selon l'invention, une articulation double (360) est interposée entre le moyen de chargement (350, 350') et le chariot (330) de manière à ce que le moyen de chargement (350, 350') puisse reposer aussi par son extrémité attelée sur le sol dans sa position de chargement/déchargement.

Il est alors aisé de placer la charge sur le moyen de chargement qui repose à plat sur le sol. La charge demeurant stable, on peut, dans ces conditions, la brider facilement et ceci par une seule personne, sur le moyen de chargement afin qu'elle puisse être transportée sur ladite remorque par le moyen de chargement.

## Description

La présente invention se rapporte à une remorque du type basculante et qui est pourvue d'un dispositif pour charger et décharger un objet qu'elle est susceptible de transporter, tel qu'une motocyclette, un bateau, une machine à laver.

Les remorques basculantes sont utilisées de longue date pour permettre le déchargement de produits en vrac qu'elles sont susceptibles de transporter. Certaines remorques sont pourvues de rampes pour faciliter le chargement et le déchargement d'objets dans la remorque. Dans le document DE-U-90 15 174, on montre ainsi une remorque de type pourvue d'un timon articulé et sur le châssis duquel est monté à coulissement un chariot et à l'arrière duquel est fixée, par l'intermédiaire d'une articulation, une rampe. La rampe est ainsi mobile entre une position de transport où elle repose sur le châssis, et une position de chargement/déchargement où elle repose par son extrémité libre, et par l'intermédiaire de roulettes, sur le sol.

Si l'on souhaite charger une motocyclette sur une telle remorque, deux personnes sont nécessaires puisqu'il faut à la fois tenir l'engin sur la rampe inclinée et la brider sur celle-ci, avant de hisser la rampe portant sa charge sur la remorque.

Aussi, le but de l'invention est donc de proposer une remorque qui puisse faciliter de manière générale le chargement et le déchargement d'un objet sur une remorque et en particulier le chargement et le déchargement d'une motocyclette et ceci, par une seule personne.

A cet effet, est proposée une remorque de type basculante comprenant un châssis sur lequel est monté un timon articulé, un chariot monté à coulissement sur le châssis pour entraîner un moyen de chargement d'une charge entre une position de chargement/déchargement de la charge où le moyen de chargement repose par une extrémité sur le sol, en étant tenu par son autre extrémité par le chariot lorsque la remorque est basculée, et une position de transport de la charge où le moyen de chargement repose sur le châssis de la remorque lorsqu'elle est configurée dans sa position de transport. Selon l'invention, une articulation double est interposée entre le moyen de chargement et le chariot de manière à ce que le moyen de chargement puisse reposer aussi par son extrémité attelée sur le sol dans sa position de chargement/déchargement.

Il est alors aisé de placer la charge sur le moyen de chargement qui repose à plat sur le sol. La charge demeurant stable, on peut, dans ces conditions, la brider facilement et ceci, par une seule personne, sur le moyen de chargement afin qu'elle puisse être transportée sur ladite remorque par le moyen de chargement.

Selon une caractéristique additionnelle de l'invention, le chariot est constitué d'une platine pourvue de quatre moyens de roulement aptes à coulisser par paires entre deux rails de section en U fixés sur le châssis en étant disposés en vis-à-vis, l'articulation double étant articulée d'un côté sur la platine par l'intermédiaire d'un axe et, de l'autre côté, sur le moyen de chargement par l'intermédiaire d'un axe amovible.

Le déplacement du moyen de chargement entre ses deux positions remarquables est obtenu par le simple coulissement du chariot. On peut également laisser sur place le moyen de chargement afin de libérer la remorque pour un autre usage.

Selon une caractéristique additionnelle de l'invention, l'articulation double est constituée d'une première fourche, d'une seconde fourche, toutes deux présentant une section en U, la première fourche étant accolée par sa branche intermédiaire à la branche intermédiaire de la seconde fourche.

On assemble les deux fourches, par exemple par boulonnage, et l'on obtient ainsi une articulation double, de section en H, facile à construire.

Selon une caractéristique additionnelle de l'invention, la première fourche est reliée au chariot par l'intermédiaire d'un axe de fixation des moyens de roulement situés à l'arrière de la platine, les branches d'extrémité de cette première fourche étant placées entre ces deux moyens de roulement et la platine, dans des renfoncements dont est pourvue ladite platine dans sa partie arrière.

On utilise ainsi un axe de fixation des roulements pour constituer une des deux articulations de l'articulation double et celle-ci est logée entre les deux rails.

Selon une caractéristique additionnelle de l'invention, des billes sont fixées aux extrémités des axes supportant les moyens de roulement pour coopérer avec le fond des rails pour guider latéralement le chariot pendant son coulissement.

Le chariot peut ainsi circuler entre les rails sans risque de coincement.

Selon une caractéristique additionnelle de l'invention, le chariot est relié à un moyen d'entraînement susceptible de le déplacer dans un sens ou dans l'autre.

Selon une caractéristique additionnelle de l'invention, le moyen d'entraînement comprend un premier treuil, un second treuil, tous deux fixés sur le timon ainsi qu'une poulie de renvoi disposée sous le châssis, dans sa partie arrière, deux câbles étant enroulés respectivement sur les deux treuils en étant reliés à la platine, l'un des câbles contournant la poulie de renvoi.

Le fonctionnement de l'un ou de l'autre treuil entraîne alors le déplacement du moyen de chargement entre ses deux positions remarquables.

Selon une caractéristique additionnelle de l'invention, le châssis de la remorque est pourvu, en deçà de sa partie arrière, d'une paire de galets placés de manière à soutenir le moyen de chargement pendant sa manoeuvre par le chariot.

Selon une caractéristique additionnelle de l'invention, le moyen de chargement est constitué d'une gouttière adaptée à réceptionner les roues avant et arrière d'un cycle et en particulier d'une motocyclette, la gouttière étant constituée d'un profilé comprenant une paroi de fond destinée à supporter la masse du cycle réunie à deux parois verticales qui sont prolongées extérieurement par deux parois horizontales recouvrant les deux rails.

Selon une caractéristique additionnelle de l'invention, la gouttière comporte une cale transversale placée sous sa paroi de fond et qui est prévue pour être logée dans un réceptacle placé à l'arrière du châssis, sous les rails, pour brider ladite gouttière sur le châssis pendant le roulage de la remorque.

Selon une caractéristique additionnelle de l'invention, la gouttière est pourvue d'un dispositif de réglage de la distance séparant ses parois verticales de manière à serrer latéralement au moins une roue du cycle ou de la motocyclette.

Selon une caractéristique additionnelle de l'invention, le dispositif de réglage est constitué d'une plaque mobile parallèlement à l'une des parois verticales sous l'effet de la manoeuvre de plusieurs boulons traversant ladite paroi verticale.

Selon une caractéristique additionnelle de l'invention, la gouttière est pourvue d'un arceau de fixation de section en U inversé, fixé de manière articulée, au niveau des extrémités de ses branches libres, sur une plaque fixée sur la gouttière, dans sa partie avant, de manière à pouvoir être rabattu sur le guidon du cycle ou de la motocyclette afin de brider le cycle ou la motocyclette sur ladite gouttière.

Selon une caractéristique additionnelle de l'invention, le moyen de chargement est constitué d'un plateau comprenant une plaque attelée à l'articulation double, par l'intermédiaire d'un axe amovible.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente une vue latérale d'une remorque de type basculante selon l'invention,
la Fig. 2 représente une vue de dessus d'une remorque de type basculante selon l'invention,
la Fig. 3 représente une vue latérale d'une remorque de type basculante en cours de transformation selon l'invention,
la Fig. 4 représente une vue d'une remorque de type basculante en position de chargement/déchargement selon l'invention,
la Fig. 5 représente une coupe d'un détail d'une remorque de type basculante selon l'invention,
la Fig. 6 représente une vue d'extrémité d'une variante de réalisation d'une gouttière pour un moyen de chargement d'une remorque basculante selon l'invention,
la Fig. 7 représente une vue de dessus d'un détail d'une remorque de type basculante selon l'invention,
la Fig. 8 représente une vue latérale d'une remorque de type basculante en position de transport et sur laquelle est chargée une motocyclette selon l'invention et,
la Fig. 9 représente une vue de dessus d'une variante de réalisation d'une remorque de type basculante selon l'invention.

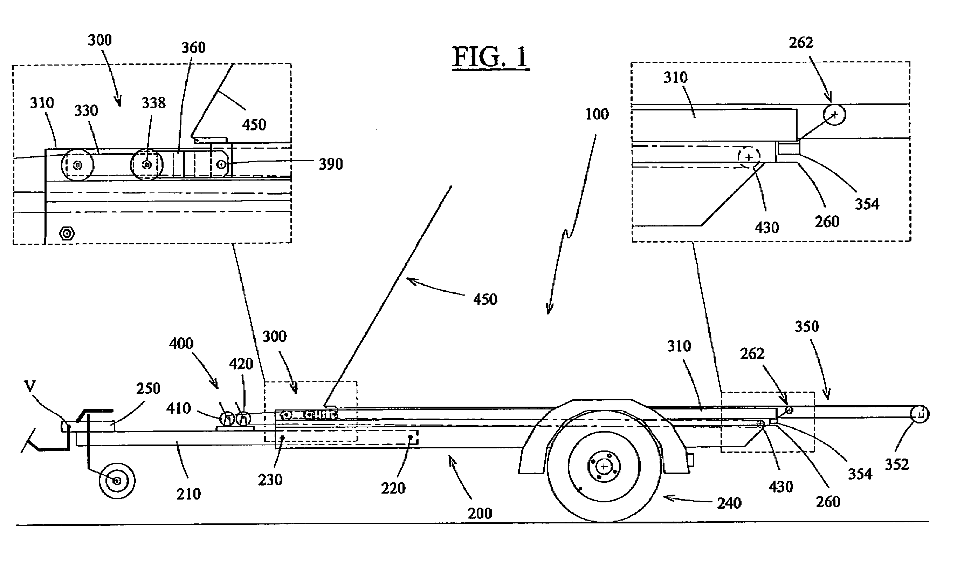

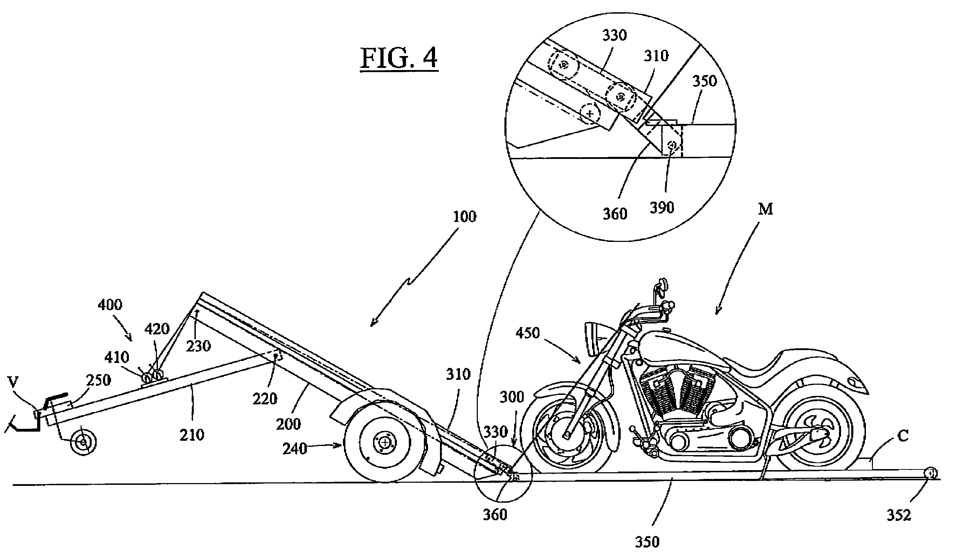

La remorque 100, présentée à la Fig. 1, est destinée à être tractée par un véhicule pour le transport d'une charge. Elle comprend un châssis 200 sur lequel est monté de manière articulée dans un plan vertical, et ceci par l'intermédiaire d'une articulation 220, un timon 210 pour permettre le basculement par l'arrière de la remorque. Le châssis est ainsi mobile entre une position de transport visible à cette Fig. 1 et une position de chargement/déchargement d'une charge ou d'un objet visible à la Fig. 4.

A la Fig. 1, un moyen de blocage 230, tel qu'un boulon, permet de verrouiller le timon 210 dans la position de transport de la remorque et où il est positionné dans le prolongement du châssis 200.

Le châssis 200 repose sur un train roulant 240 alors que le timon 210 est pourvu d'une attache remorque 250 adaptée à être accrochée sur le véhicule tracteur V qui est matérialisé ici par un simple crochet d'attelage.

On remarquera que l'articulation 220 est placée sur le châssis 200 à l'avant du train roulant 240.

La remorque 100 est pourvue d'un dispositif 300 de chargement et de déchargement d'une charge. Ce dispositif 300 est adapté à prendre une charge placée sur un moyen de chargement, par exemple une gouttière pour le transport d'un cycle, un plateau pour le transport d'objets, pour l'emmener sur le châssis de la remorque alors que la charge repose, éventuellement bridée, sur ledit moyen de chargement.

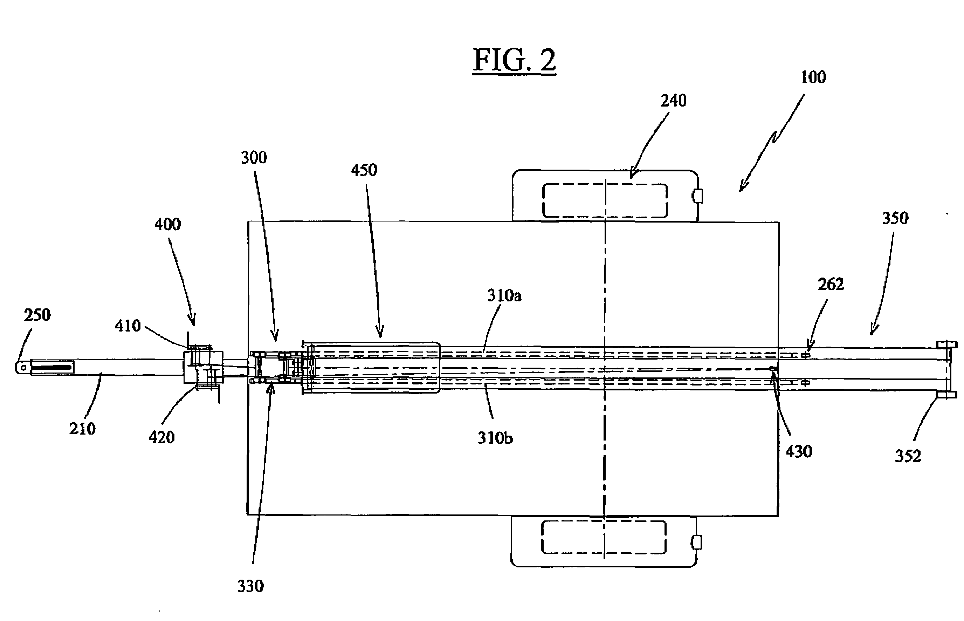

A la Fig. 2, le dispositif 300 de chargement et de déchargement comprend ainsi une paire de rails 310a, 310b fixés sur le châssis 200 et entre lesquels peut coulisser un chariot 330 apte à déplacer un moyen de chargement 350 entre une position de chargement/déchargement, visible à la Fig. 4 où il repose sur le sol, et une position de transport, visible à cette Fig. 2 où il repose sur le châssis 200. Dans la position de chargement/déchargement du dispositif 300, la remorque doit être attelée à un véhicule et son châssis 200 positionné dans sa position de chargement/déchargement, alors que dans la position de transport du dispositif 300, le châssis de la remorque doit être positionné dans sa position de transport.

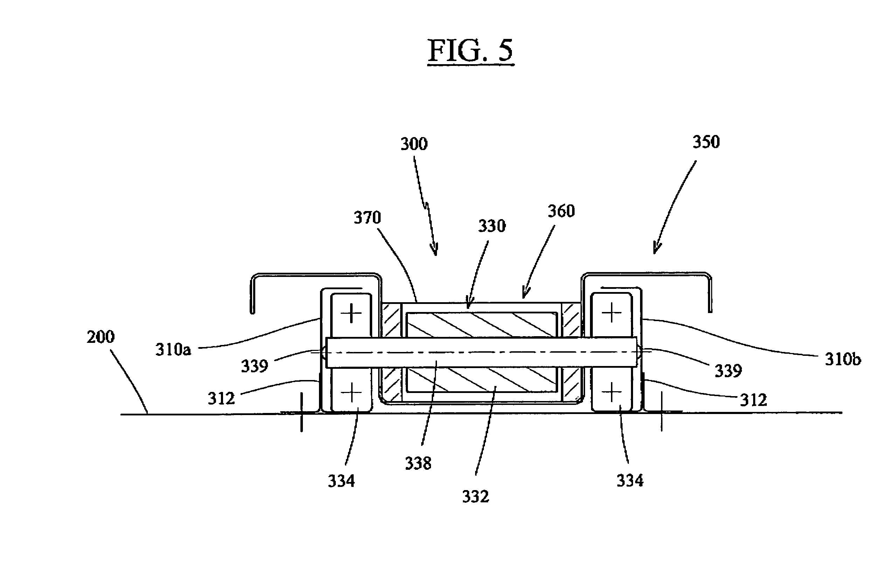

A la Fig. 5, les deux rails 310a, 310b sont fixés longitudinalement sur le châssis 200 en étant disposés parallèlement l'un par rapport à l'autre. Les rails 310 possèdent une section en U et leurs branches libres sont tournées en vis-à-vis. Les rails 310 sont de préférence fixés sur le châssis 200 par l'intermédiaire de cornières 312 boulonnées sur celui-ci pour permettre une adaptation rapide du dispositif 300 sur une remorque du commerce.

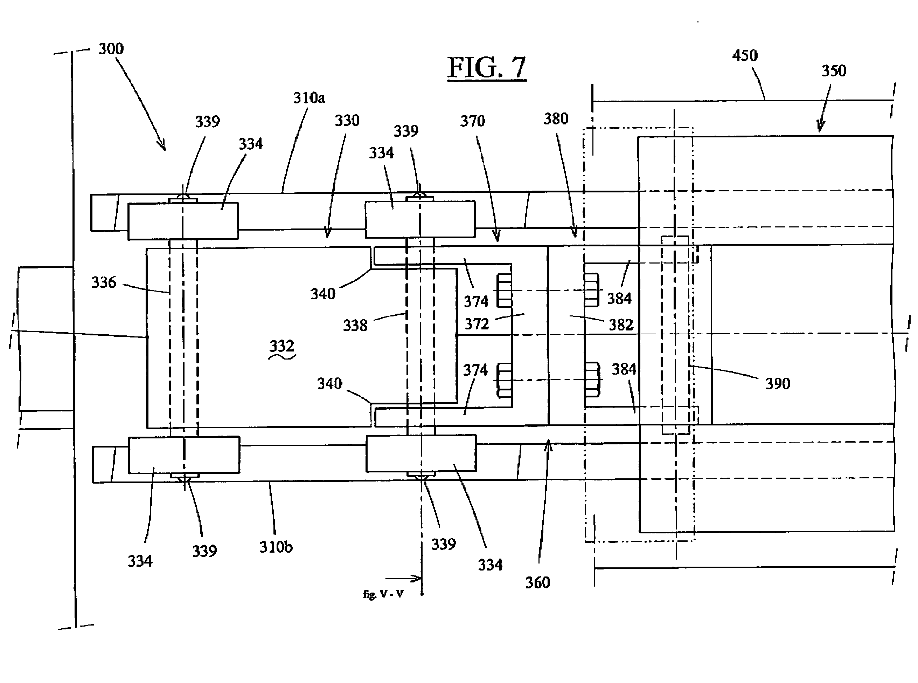

A la Fig. 7, le chariot 330 comprend une platine 332 de section rectangulaire ou carrée et aux quatre coins de laquelle sont montés quatre moyens de roulement 334, tels que des roulements à billes, Ceux-ci sont montés, respectivement par paires, sur deux axes 336, 338 traversant ladite platine. Les roulements, situés d'un même côté, sont logés dans un rail 310a ou 310b de telle manière que le chariot puisse coulisser librement sur le châssis 200, entre les deux rails 310a et 310b.

Les axes 336 et 338 sont pourvus, à leurs extrémités libres, de billes 339 adaptées à coopérer avec le fond des rails 310 pour guider latéralement le chariot 330 pendant son coulissement afin d'éviter tout coincement de celui-ci.

Le moyen de chargement 350 est, aux Figs. 1 et 2, constitué d'une gouttière adaptée à réceptionner les roues avant et arrière d'un cycle et en particulier d'une motocyclette dont la masse relativement élevée ne lui permet pas d'être soulevée par une seule personne pour être chargée dans une remorque.

A la Fig. 5, la gouttière 350 est constituée d'un profilé comprenant une paroi de fond destinée à supporter la masse du cycle, réunie à deux parois verticales qui sont prolongées extérieurement par deux parois horizontales recouvrant les deux rails 310a et 310b. La paroi de fond repose pratiquement sur le sol dans la position de chargement/déchargement de la gouttière si bien que le placement et le maintien d'une motocyclette sur la gouttière ne posent aucune difficulté particulière.

Aux Figs. 1 et 2, la gouttière 350 est pourvue à son extrémité libre, d'un jeu de roulettes 352 adaptées à faciliter son déplacement lorsque ladite extrémité est déplacée sur le sol par le chariot 330.

A la Fig. 1, la gouttière 350 comporte une cale transversale 354 placée sous sa paroi de fond et qui est prévue pour être logée dans un réceptacle 260 placé à l'arrière du châssis 200, sous les rails 310, pour brider ladite gouttière sur le châssis pendant le roulage de la remorque 100.

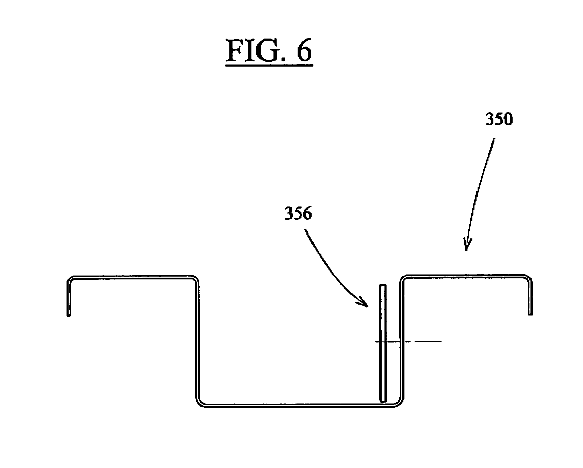

Dans une variante de réalisation présentée à la Fig. 6, la gouttière 350 est pourvue d'un dispositif de réglage 356 de la distance séparant ses parois verticales de manière à serrer latéralement au moins une roue du cycle ou de la motocyclette. Ce dispositif de réglage 356 est constitué, à cette Fig. 6, d'une plaque mobile parallèlement à l'une des parois verticales sous l'effet de la manoeuvre de plusieurs boulons traversant ladite paroi verticale. Les boulons sont symbolisés par un simple trait d'axe à cette Fig. 6.

A la Fig. 7, la gouttière 350 est attelée, par un de ses côtés, au chariot 330 par l'intermédiaire d'une articulation double 360, c'est-à-dire que cette articulation double 360 est articulée d'un côté sur le chariot 330 et de l'autre côté sur la gouttière 350. Cette conception de la liaison entre le moyen de chargement 350 et le chariot 330 permet de placer à plat sur le sol ledit moyen de chargement lorsqu'il est placé dans sa position de chargement/déchargement. Le chargement de la motocyclette sur la remorque en est rendu beaucoup plus aisé puisque dans un premier temps on place la motocyclette sur la gouttière en l'arrimant et l'on transfère la gouttière sur la remorque comme cela est expliqué en détail ci-après. Cette opération peut être réalisée par une seule personne.

L'articulation double 360 est ainsi constituée d'une première fourche 370 et d'une seconde fourche 380, toutes deux présentant une section en U, et qui sont solidarisées l'une à l'autre.

La première fourche 370 est accolée par sa branche intermédiaire 372 à la branche intermédiaire 382 de la seconde fourche 380. L'articulation double 360 présente une section en forme de H. Les branches intermédiaires 372 et 382 des deux fourches 370, 380 sont solidarisées par boulonnage comme cela apparaît à cette Fig. 7. La première fourche 370 est reliée au chariot 330 de préférence par l'intermédiaire de l'axe 338 de fixation des roulements 334 situés à l'arrière de la platine 332. Les branches d'extrémité 374 de la première fourche 370 sont ainsi placées entre ces deux roulements 334 et la platine 332, dans des renfoncements 340 dont est pourvue ladite platine dans sa partie arrière.

Les branches d'extrémité 384 de la seconde fourche 380 sont fixées à la gouttière 350 par l'intermédiaire d'un axe amovible 390 permettant de démonter ladite gouttière lorsqu'elle repose sur le sol afin de rendre disponible la remorque pour un autre usage. L'axe amovible 390 est constitué de préférence d'une goupille.

Aux Figs. 1 et 2, la remorque 100 est pourvue d'un moyen d'entraînement 400 du chariot 330 entre ses deux positions remarquables permettant ainsi de déplacer la gouttière 350 entre sa position de chargement/déchargement et sa position de transport et vice-versa.

Le moyen d'entraînement 400 comprend, à la Fig. 1, un premier treuil 410, un second treuil 420, tous deux fixés sur le timon 210 ainsi qu'une poulie de renvoi 430 disposée sous le châssis 200, dans sa partie arrière. Un câble, enroulé sur le premier treuil 410, est relié par son extrémité libre sur la partie avant de la platine 332 pour déplacer le chariot 330 de l'arrière vers l'avant de la remorque 100. Un autre câble, enroulé sur le second treuil 420, est relié par son extrémité libre sur la partie arrière de la platine 332 pour déplacer le chariot 330 de l'arrière vers l'avant de la remorque 100 en contournant la poulie de renvoi 430.

Dans une première variante de réalisation, non représentée, le moyen d'entraînement 400 ne comporte qu'un seuil treuil à double tambour d'enroulement.

Dans une seconde variante de réalisation, non représentée, le ou les treuils sont de type motorisé.

Aux Figs. 1 et 2, le châssis 200 de la remorque est pourvu, en deçà de sa partie arrière, d'une paire de galets 262 placés de manière à soutenir le moyen de chargement 350 pendant sa manoeuvre par le chariot 330. La gouttière 350 est soutenue au niveau de ses parois horizontales.

Aux Figs. 1 et 2, la remorque 100 est pourvue d'un arceau de fixation 450 d'une motocyclette sur la remorque 100. L'arceau de fixation 450 présente une section en U inversé. Il est fixé de manière articulée, au niveau des extrémités de ses branches libres, sur une plaque fixée sur la gouttière 350, dans sa partie avant, de manière à pouvoir être rabattu sur le guidon de la motocyclette afin de la brider sur ladite gouttière. L'arceau peut être du type coulissant afin d'être adapté à différentes catégories de hauteur de motocyclettes. On peut ainsi brider le train avant de la motocyclette pour éviter tout mouvement de compression de la fourche.

Plusieurs rampes pourvues de leurs dispositifs de chargement et de déchargement peuvent être installées côte à côte sur la remorque pour permettre le transport de plusieurs motocyclettes.

L'utilisation et le fonctionnement de la remorque se présentent de la manière suivante.

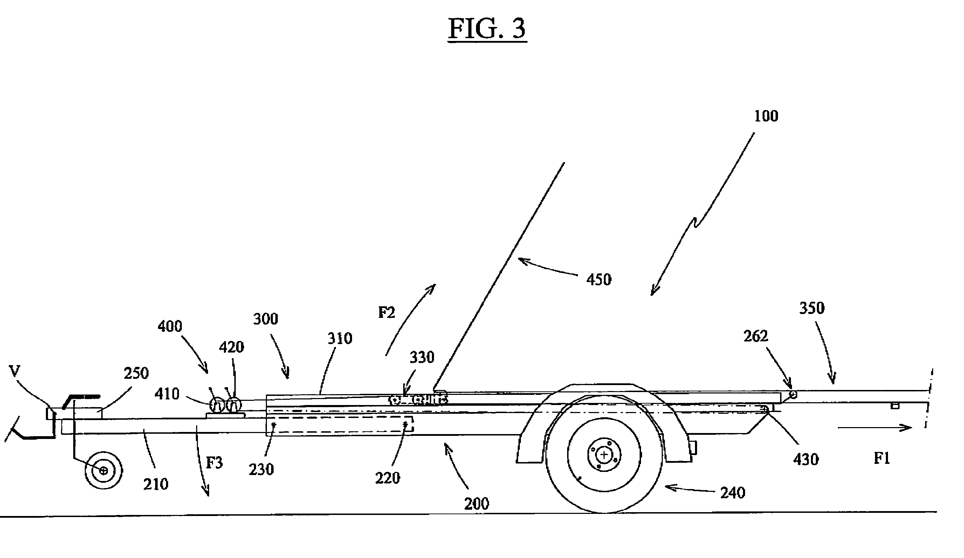

Pour charger une motocyclette sur la remorque, on attèle la remorque 100 au crochet d'attelage d'un véhicule V, on retire le boulon 230 puis l'on manoeuvre le second treuil 420 de manière à faire coulisser la gouttière 350 sur les galets 262 comme le montre la flèche F1 à la Fig. 3, Lorsque le centre de gravité de la remorque se déplace à l'arrière de l'axe du train roulant 240, le châssis 200 de la remorque bascule en arrière autour de l'axe du train roulant 240 vers sa position de chargement/déchargement comme l'indique la flèche F2 alors que le timon 210 s'incline suivant la flèche F3. La gouttière 350 suit le mouvement du châssis 200 et finit par entrer en contact avec le sol par l'intermédiaire de ses roulettes où elle poursuit son mouvement vers sa position de chargement/déchargement sous l'effet du déplacement du chariot 330.

Lorsque le chariot 330 parvient à l'arrière du châssis 200, comme cela apparaît à la Fig. 4, l'articulation double 360 bascule vers le bas si bien que la gouttière 350 repose sur toute sa longueur sur le sol. On peut alors facilement faire avancer une motocyclette M sur le fond de la gouttière 350 et la maintenir en équilibre par sa béquille latérale reposant sur le sol. On bride ensuite la motocyclette sur la gouttière 350 par l'intermédiaire de l'arceau de fixation 450. On peut aussi utiliser une cale C pour caler sa roue arrière. On peut également serrer latéralement la roue arrière à l'aide du dispositifde réglage 356.

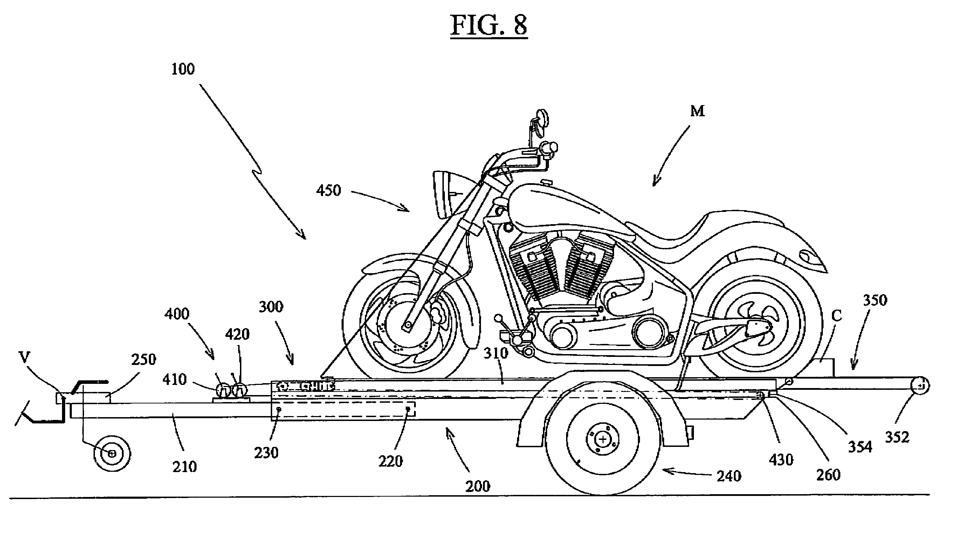

Lorsque la motocyclette M est convenablement bridée sur la gouttière 350, on peut alors la jucher sur la remorque 100 en manoeuvrant le premier treuil 410 pour déplacer la gouttière 350 vers sa position de transport. Le châssis 200 de la remorque bascule pendant cette opération vers sa position de transport. La remorque chargée de la motocyclette est visible à la Fig. 8. Le chariot 330 est ensuite bloqué dans sa position de transport par un moyen de blocage, tel qu'un boulon, non représenté.

A l'issue de son transport, la motocyclette peut être déposée sur le sol par une opération inverse à son chargement.

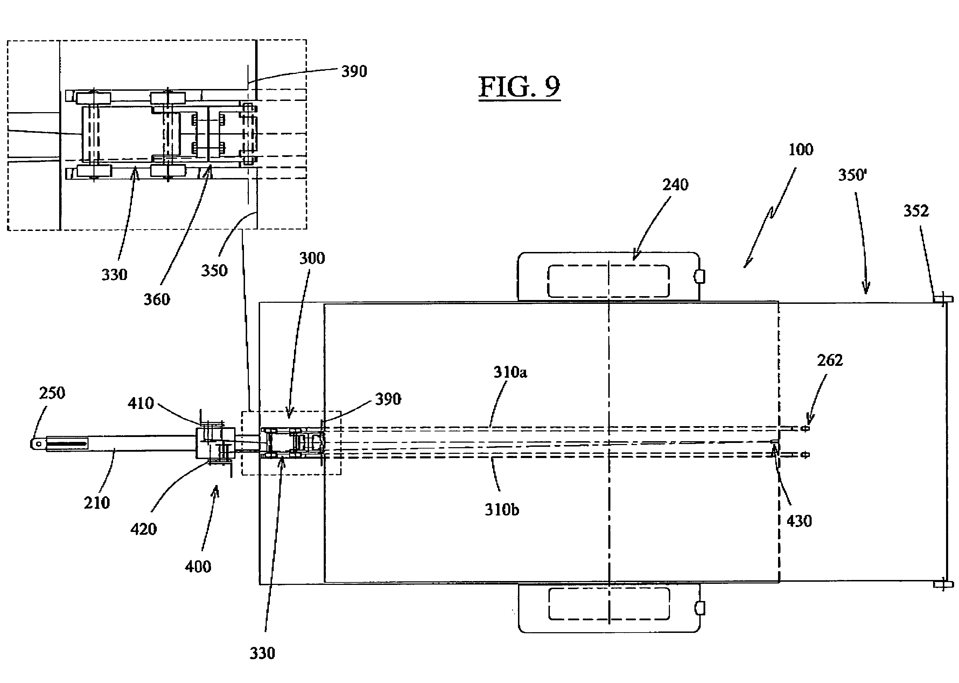

Dans une variante de réalisation représentée à la Fig. 9, le moyen de chargement est constitué d'un plateau 350' permettant le chargement/déchargement sur la remorque 100 d'objets lourds et/ou encombrants, par exemple une machine à laver. Le plateau 350' est constitué d'une plaque attelée à l'articulation double 360, par l'intermédiaire d'un axe amovible 390, comme la gouttière décrite précédemment. Le plateau peut être ceinturé par des parois latérales pour permettre le transport de produits en vrac. Le plateau peut encore être pourvu de supports adaptés à soutenir un bateau.

La remorque, pourvue de son dispositif de chargement et de déchargement, permet de charger et décharger sur son moyen de chargement, et sans effort, toute sorte de charges et en particulier des motocyclettes.

Une seule personne est nécessaire pour procéder à son chargement ou à son déchargement.

Le moyen de chargement peut facilement être désolidarisé de la remorque pour la libérer pour un autre usage.

Le dispositif de chargement et de déchargement peut facilement être installé sur une remorque du commerce.

## Revendications

1. Remorque (100) de type basculante comprenant un châssis (200) sur lequel est monté un timon articulé (210), un chariot (330) monté à coulissement sur le châssis (200) pour entraîner un moyen de chargement (350, 350') d'une charge entre une position de chargement/déchargement de la charge où le moyen de chargement (350, 350') repose par une extrémité sur le sol en étant tenu par son autre extrémité par le chariot (330) lorsque la remorque (100) est basculée et une position de transport de la charge où le moyen de chargement (350, 350') repose sur le châssis (200) de la remorque (100) lorsqu'elle est configurée dans sa position de transport, **caractérisée en ce qu'**une articulation double (360) est interposée entre le moyen de chargement (350, 350') et le chariot (330) de manière à ce que le moyen de chargement (350, 350') puisse reposer aussi par son extrémité attelée sur le sol dans sa position de chargement/déchargement.

2. Remorque (100) selon la revendication 1, **caractérisée en ce que** le chariot (330) est constitué d'une platine (332) pourvue de quatre moyens de roulement (334) aptes à coulisser par paires entre deux rails (310a, 310b) de section en U fixés sur le châssis (200) en étant disposés en vis-à-vis, l'articulation double (360) étant articulée d'un côté sur la platine (332) par l'intermédiaire d'un axe (338) et de l'autre côté sur le moyen de chargement (350, 350') par l'intermédiaire d'un axe amovible (390).

3. Remorque (100) selon la revendication 1 ou 2, **caractérisée en ce que** l'articulation double (360) est constituée d'une première fourche (370), d'une seconde fourche (380), toutes deux présentant une section en U, la première fourche (370) étant accolée par sa branche intermédiaire (372) à la branche intermédiaire (382) de la seconde fourche (380).

4. Remorque (100) selon la revendication 3, **caractérisée en ce que** la première fourche (370) est reliée au chariot (330) par l'intermédiaire d'un axe (338) de fixation des moyens de roulement (334) situés à l'arrière de la platine (332), les branches d'extrémité (374) de cette première fourche (370) étant placées entre ces deux moyens de roulement (334) et la platine (332), dans des renfoncements (340) dont est pourvue ladite platine dans sa partie arrière.

5. Remorque selon la revendication 2, 3 ou 4, **caractérisée en ce que** des billes (339) sont fixées aux extrémités des axes (336, 338) supportant les moyens de roulement (334) pour coopérer avec le fond des rails (310) pour guider latéralement le chariot (330) pendant son coulissement.

6. Remorque (100) selon l'une quelconque des revendications 1 à 5, **caractérisée en ce que** le chariot (330) est relié à un moyen d'entraînement (400) susceptible de le déplacer dans un sens ou dans l'autre.

7. Remorque (100) selon la revendication 6, **caractérisée en ce que** le moyen d'entraînement (400) comprend un premier treuil (410), un second treuil (420), tous deux fixés sur le timon (210) ainsi qu'une poulie de renvoi (430) disposée sous le châssis (200), dans sa partie arrière, deux câbles étant enroulés respectivement sur les deux treuils (410, 420) en étant reliés à la platine (332), l'un des câbles contournant la poulie de renvoi (430).

8. Remorque (100) selon l'une quelconque des revendications 1 à 7, **caractérisée en ce que** le châssis (200) de la remorque est pourvu, en deçà de sa partie arrière, d'une paire de galets (262) placés de manière à soutenir le moyen de chargement (350, 350') pendant sa manoeuvre par le chariot (330).

9. Remorque (100) selon l'une quelconque des revendications 2 à 8, **caractérisée en ce que** le moyen, de chargement est constitué d'une gouttière (350) adaptée à réceptionner les roues avant et arrière d'un cycle et en particulier d'une motocyclette, la gouttière étant constituée d'un profilé comprenant une paroi de fond destinée à supporter la masse du cycle réunie à deux parois verticales qui sont prolongées extérieurement par deux parois horizontales recouvrant les deux rails (310a et 310b).

10. Remorque (100) selon la revendication 9, **caractérisée en ce que** la gouttière (350) comporte une cale transversale (354) placée sous sa paroi de fond et qui est prévue pour être logée dans un réceptacle (260) placé à l'arrière du châssis (200), sous les rails (310), pour brider ladite gouttière sur le châssis pendant le roulage de la remorque (100).

11. Remorque (100) selon la revendication 9 ou 10, **caractérisée en ce que** la gouttière (350) est pourvue d'un dispositif de réglage (356) de la distance séparant ses parois verticales de manière à serrer latéralement au moins une roue du cycle ou de la motocyclette.

12. Remorque (100) selon la revendication 11, **caractérisée en ce que** le dispositif de réglage (352) est constitué d'une plaque mobile parallèlement à l'une des parois verticales sous l'effet de la manoeuvre de plusieurs boulons traversant ladite paroi verticale.

13. Remorque (100) selon l'une quelconque des revendications 9 à 12, **caractérisée en ce que** la gouttière (350) est pourvue d'un arceau de fixation (450) de section en U inversé, fixé de manière articulée, au niveau des extrémités de ses branches libres, sur une plaque fixée sur la gouttière (350), dans sa partie avant, de manière à pouvoir être rabattu sur le guidon du cycle ou de la motocyclette afin de brider le cycle ou la motocyclette sur ladite gouttière.

14. Remorque (100) selon l'une quelconque des revendications 2 à 8, **caractérisée en ce que** le moyen de chargement est constitué d'un plateau (350') comprenant une plaque attelée à l'articulation double (360), par l'intermédiaire d'un axe amovible (390).
